# EUROPEAN PATENT SPECIFICATION

(11) **EP 4 083 830 B1**
(45) Date of publication and mention of the grant of the patent: **26.02.2025**
(21) Application number: 20910373.8
(22) Date of filing: 29.12.2020
(51) Int. Cl.: G06F 21/31, H04L 9/40

(54) **IDENTITY AUTHENTICATION METHOD AND APPARATUS, AND RELATED DEVICE**
VERFAHREN UND VORRICHTUNG ZUR IDENTITÄTSAUTHENTIFIZIERUNG UND ZUGEHÖRIGE VORRICHTUNG
PROCÉDÉ ET APPAREIL D'AUTHENTIFICATION D'IDENTITÉ ET DISPOSITIF ASSOCIÉ

(30) Priority: 31.12.2019 CN 201911417640
(43) Date of publication of application: 02.11.2022
(73) Proprietor: Huawei Cloud Computing Technologies Co., Ltd., Guizhou 550025 (CN)
(72) Inventor: HAN, Changyao, Shenzhen, Guangdong 518129 (CN); ZHOU, Dichao, Shenzhen, Guangdong 518129 (CN)
(74) Representative: Epping - Hermann - Fischer
(86) International application number: PCT/CN2020/141007
(87) International publication number: WO 2021/136290

(56) References cited:
- CN-A- 102 624 720
- CN-A- 108 900 561
- CN-A- 111 177 686
- US-A1- 2014 082 715
- US-A1- 2018 026 796
- US-A1- 2019 199 522
- FENG GANG, SONG JIHUA: "A user authentication scheme based on single sign-on", DAZHONG KEJI - POPULAR SCIENCE & TECHNOLOGY, ZHONG GUO KE JI KAI FA YUAN GUANG XI XUE YUAN, CN, no. 6, 1 January 2009 (2009-01-01), CN, pages 44 - 34, XP055826907, ISSN: 1008-1151
- LI CHEN: "A Security Framework Based on Two Layers of Online Identity Authentication System Design and Implementation", MASTER THESIS, TIANJIN POLYTECHNIC UNIVERSITY, CN, 1 January 2014 (2014-01-01), CN, XP055826909, ISSN: 1674-0246

## Description

### TECHNICAL FIELD

This application relates to the field of computer technologies, and in particular, to an identity authentication method, a server of a cloud service provider, and a computer-readable storage medium

### BACKGROUND

With the development of network technologies, a user often needs to use services provided by different service providers (service provider, SP). However, each SP usually has an independent identity authentication system. When the user needs to use the services provided by the different SPs, the user needs to be authenticated by the identity authentication system of each SP before using the services.

Currently, identity authentication systems of different SPs may be federated. A single sign-on (single sign on, SSO) technology is used to implement authentication in a single identity authentication system, so that services provided by SPs corresponding to a plurality of federated identity authentication systems can be used. However, when the plurality of identity authentication systems are federated, authentication can succeed by using only a single authentication credential. If the single authentication credential is leaked, an attacker may use services of a plurality of SPs by using an identity credential of a single system, and user information security is seriously threatened.

US 2018/026796 A1 relates to a method for distributed trust authentication of one or more users attempting to access one or more service providers operating on a network, including performing primary authentication of a user using a first authentication factor, generating a first partial digital signature for a first authentication response to the primary authentication, performing secondary authentication of the user using a second authentication factor, generating a second partial digital signature for the second authentication response to the secondary authentication, combining the first and second partial digital signatures to form a composite digital signature, and validating the composite digital signature.

US 2014/082715 A1 discloses features for authentication of mobile device applications using a native, independent browser using a single-sign-on system. An authentication module within the mobile application can direct the mobile device's native browser to a URL to initiate authentication with an authentication appliance. The mobile browser can receive and store a browser-accessible token to indicate previous authentication performed by the user. The mobile application can receive from the application appliance and store a client application ID token that may be presented to network services for access. A second mobile device application may direct the same browser to the authentication appliance. The authentication appliance may inspect the persistent browser-accessible token and issue a second client application ID identity to the second application without collecting additional authentication information, or collecting additional authentication information that is different from the first authentication information.

### SUMMARY

Embodiments of this application disclose an identity authentication method, a server of a cloud service provider, and a computer-readable storage medium In a process of federated identity authentication, an identity of a user is confirmed through multi-factor authentication, to prevent a risk that is caused to user data security due to leakage of an identity credential of a single system, and improve security of federated identity authentication. The invention is defined by the attached set of claims. Further details of the disclosed methods, devices and system are provided in the following, which are helpful for understanding the claimed invention.

According to a first aspect, embodiments of this application provide a federated identity authentication method, including:
A server of a service provider receives a message indicating that a user identity of a user has been authenticated by a server of an identity provider, where the message includes information about a verification method bound to the user. The server of the service provider sends a verification request to a user terminal based on the information about the verification method.

The server of the service provider receives a verification code sent by the user terminal, and performs verification on the verification code.

When the server of the service provider has verified the verification code, the server of the service provider generates an access credential corresponding to the user, and sends the access credential to the user terminal, where the access credential indicates that the user has permission to access the server of the service provider.

By implementing the foregoing method, during federated identity authentication, after the server of the identity provider performs first authentication on the user identity of the user and the authentication succeeds, the server of the service provider needs to perform second authentication on the user identity, and the server of the service provider allows the user to access resources of the service provider only after the second authentication on the user by the server of the service provider succeeds. Multi-factor authentication on the user identity prevents an identity credential of a single system from being used during federated identity authentication, prevents a risk that is caused to user data security due to leakage of the identity credential of the single system, and improves security of federated identity authentication.

In a specific embodiment, that the server of the service provider sends a verification request to a user terminal based on the information about the verification method includes:
The server of the service provider determines, based on the information about the verification method, a method in which the user receives the verification code, where the method in which the user receives the verification code includes receiving the verification code via an email or receiving the verification code via an SMS message.

The server of the service provider sends the verification request to the user terminal, generates the verification code, and sends, in the determined method in which the user receives the verification code, the verification code to an electronic device used by the user.

In a specific embodiment, the verification code is generated by a multi-factor authentication device used by the user, and the message includes a multi-factor authentication key of the user.

That the server of the service provider receives a verification code sent by the user terminal, and performs verification on the verification code includes:
The server of the service provider receives a first verification code that is generated by the multi-factor authentication device and sent by the user terminal.

The device of the service provider generates a second verification code based on the multi-factor authentication key, and performs verification on the first verification code based on the second verification code.

In a specific embodiment, before the server of the service provider receives the message indicating that the user identity of the user has been authenticated by the server of the identity provider, the method further includes:
The server of the service provider receives a first access request sent by the user terminal, where the first access request includes an identifier of the identity provider.

The server of the service provider generates an authentication request based on the first access request, where the authentication request includes an identifier of the service provider.

The server of the service provider determines an address of the server of the identity provider based on the identifier of the identity provider; and sends the authentication request to the server of the identity provider, where the authentication request indicates the server of the identity provider to perform authentication on the user identity of the user and to send the message to the user terminal based on an authentication result.

In a specific embodiment, the method further includes: The server of the service provider receives a second access request sent by the user terminal, where the second access request includes the access credential.

When the server of the service provider determines that the access credential is a valid access credential issued by the server of the service provider, the server of the service provider sends data to be accessed by using the second access request to the user terminal, where the service provider may be a cloud service provider.

According to a second aspect, embodiments of this application provide an identity authentication apparatus, including:
a receiving unit, configured to receive a message indicating that a user identity of a user has been authenticated by a server of an identity provider, where the message includes information about a verification method bound to the user;
a sending unit, configured to send a verification request to a user terminal based on the information about the verification method, where
the receiving unit is further configured to receive a verification code sent by the user terminal; and
a processing unit, configured to perform verification on the verification code, and when the verification on the verification code succeeds, generate an access credential corresponding to the user, where the access credential indicates that the user has permission to access a server of a service provider, and
the sending unit is further configured to send the access credential to the user terminal.

In a specific embodiment, the processing unit is further configured to determine, based on the information about the verification method, a method in which the user receives the verification code, and generate the verification code, where the method in which the user receives the verification code includes receiving the verification code via an email or receiving the verification code via an SMS message.

The sending unit is specifically configured to send the verification request to the user terminal, and send, in the determined method in which the user receives the verification code, the verification code to an electronic device used by the user.

In a specific embodiment, the verification code is generated by a multi-factor authentication device used by the user, and the message includes a multi-factor authentication key of the user.

The receiving unit is further configured to receive a first verification code that is generated by the multi-factor authentication device and sent by the user terminal.

The processing unit is specifically configured to generate a second verification code based on the multi-factor authentication key and perform verification on the first verification code based on the second verification code.

In a specific embodiment, the receiving unit is further configured to receive an access request sent by the user terminal, where the access request includes an identifier of the identity provider.

The processing unit is further configured to generate an authentication request based on the access request, where the authentication request includes an identifier of the service provider; and
determine an address of the server of the identity provider based on the identifier of the identity provider. The sending unit is further configured to send the authentication request to the server of the identity provider, where the authentication request indicates the server of the identity provider to perform authentication on the user identity of the user and to send the message to the user terminal based on an authentication result.

According to a third aspect, embodiments of this application provide a server, including a processor and a memory. The memory is configured to store instructions, the processor is configured to execute the instructions, and when the processor executes the instructions, the server performs the method according to any one of the first aspect or the specific embodiments of the first aspect.

According to a fourth aspect, embodiments of this application provide a computer-readable storage medium The computer-readable storage medium stores a computer program, and when the computer program is executed by a processor, the processor performs the method according to any one of the first aspect or the specific embodiments of the first aspect.

### BRIEF DESCRIPTION OF DRAWINGS

FIG. 1 is a schematic diagram of a federated identity authentication system according to an embodiment of this application;
FIG. 2A and FIG. 2B are a schematic interaction diagram of federated identity authentication according to an embodiment of this application;
FIG. 3 is a schematic diagram of a multi-factor authentication page according to an embodiment of this application;
FIG. 4A and FIG. 4B are a schematic interaction diagram of another federated identity authentication system according to an embodiment of this application;
FIG. 5 is a schematic diagram of a structure of an identity authentication apparatus according to an embodiment of this application; and
FIG. 6 is a schematic diagram of a structure of a server according to an embodiment of this application.

### DESCRIPTION OF EMBODIMENTS

To help a person skilled in the art better understand the technical solutions in this application, some concepts used in embodiments of this application are first described.

Multi-factor authentication (multi-factor authentication, MFA) is a computer access control method. A user can be authorized to use computer resources only after succeeding in two or more types of authentication.

A time-based one-time password (time-based one-time password) algorithm is an algorithm in which a one-time password is calculated based on a key and current time. The TOTP algorithm uses a cryptographic hash function to combine the key with a current timestamp to generate the one-time password. The TOTP algorithm is mainly used in an MFA system When logging in to a system, a user obtains a to-be-confirmed verification code that is generated by a virtual MFA device or a physical MFA device according to the TOTP algorithm A user terminal sends, to a system server to which the user needs to log in, the to-be-confirmed verification code entered by the user. After receiving the to-be-confirmed verification code sent by the user terminal, the system server generates a verification code based on a key corresponding to the user and current time. When determining that the to-be-confirmed verification code is the same as the verification code generated by the server, the system server determines that the user is an authorized user. An identity provider (identity provider, IDP) is a service provider that is responsible for collecting and storing user identity information and provides an identity management system for an enterprise. A server of the IDP stores identity information of a user of an enterprise system, and the identity information of the user includes a user name, a password, an email address, a mobile number, and the like of the user. When a user of the enterprise system logs in to the enterprise system, the server of the IDP performs identity authentication on the user. The identity management system provided by the IDP is an identity management system of the enterprise.

A service provider (service provider, SP) is a provider that provides different services for a user, for example, a cloud service provider. When the user needs to use a service provided by the SP, the user needs to be registered with the SP. After the user is registered successfully, identity information of the user is stored in a server of the SP. When the user logs in to an SP system, an identity authentication system of the SP performs identity authentication on the user.

When the user needs to use services provided by different systems, the user needs to be authenticated by different identity authentication systems when logging in to the different systems. For example, when the user needs to use an enterprise system, the user needs to log in to the enterprise system, and the identity management system of the IDP performs identity authentication on the user during login. When the user needs to use a service of the SP, the user needs to log in to the SP system, and the identity management system of the SP performs identity authentication on the user during login. In this manner, when the user uses a service of a system, the user needs to log in to the system by using an identity credential, and the user needs to record identity credentials such as accounts and passwords of different application systems, resulting in low work efficiency.

For example, an enterprise is a user of a cloud service provider, the enterprise applies for cloud service resources from the cloud service provider, and the enterprise has an enterprise account and a password of a corresponding cloud service. If users of an enterprise system need to use the cloud service resources applied by the enterprise, an administrator of the enterprise account can create user groups and sub-accounts for the users of the enterprise system under the enterprise account, and allocate each sub-account to a user group. Each user group has different permission, and each sub-account can be added to one or more user groups. When using the enterprise system, a user of the enterprise system needs to use an account and a password registered in the enterprise system to log in to the enterprise system When logging in to the enterprise system, the user needs to be authenticated by the identity management system of the IDP. When the user of the enterprise system needs to use cloud service resources of the enterprise, the user needs to use the enterprise account and the sub-account allocated by the enterprise to log in to the cloud service system The user needs to be authenticated by an identity authentication system of the cloud service system during login.

Federated identity authentication is a process in which an IDP and an SP establish a trust relationship and complete an interaction process, to implement user single sign-on. The single sign-on means that after logging in to an identity management system of the IDP, a user of an enterprise system can access, through a redirection link, an SP system with which a trust relationship has been established. For example, after the IDP of the enterprise establishes a trust relationship with a cloud service provider, a user of the enterprise system may log in to the identity management system of the IDP by using an account and a password of the enterprise system through a login entry provided by the cloud service provider, to access a system of the cloud service provider and use the cloud service resources applied by the enterprise from the cloud service provider.

When the trust relationship is established between the IDP and the SP, metadata (metadata) needs to be exchanged between the IDP and the SP. Metadata of the IDP includes an IDP identifier of the IDP, an address of a server of the IDP, a public key of the IDP, a protocol supported by the IDP, and the like, and metadata of the SP includes an SP identifier of the SP, an address of a server of the SP, a public key of the SP, and a protocol supported by the SP, and the like. In embodiments of this application, an example in which the protocol supported by the IDP and the protocol supported by the SP are a security assertion markup language (security assertion markup language, SAML) protocol is used for description.

The SAML is an open-source standard data format based on the extensible markup language (extensible markup language, XML), and is mainly used for data exchange between the IDP and the SP, to implement identity authentication during federated identity authentication. For example, when the user needs to use a cloud service but logs in to the identity management system of the IDP, after the IDP performs verification on an account and a password that are of an enterprise system and that are entered by the user, the IDP needs to generate an assertion in a SAML format including user information, and then send the assertion to a server of a cloud system. The server of the cloud system converts a user, a user group, and access permission in the enterprise system into a user, a user group, and access permission in the cloud system according to a preconfigured identity conversion rule.

The federated identity authentication can implement single sign-on of two or more systems, and help the user use a plurality of systems and improves work efficiency. However, during the federated identity authentication, the user only needs to use an identity credential of a single system to log in to systems of two or more service providers after being authenticated by the identity management system of the IDP. If the identity credential of the single system is leaked, user data security is at risk.

Embodiments of this application provide a federated identity authentication method. A multi-factor identity authentication mechanism is introduced into a federated identity authentication process, to improve user data security.

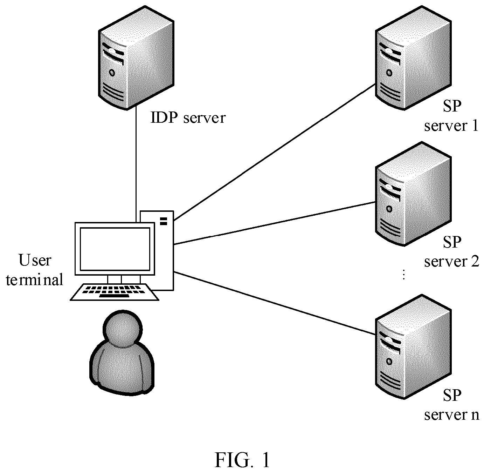

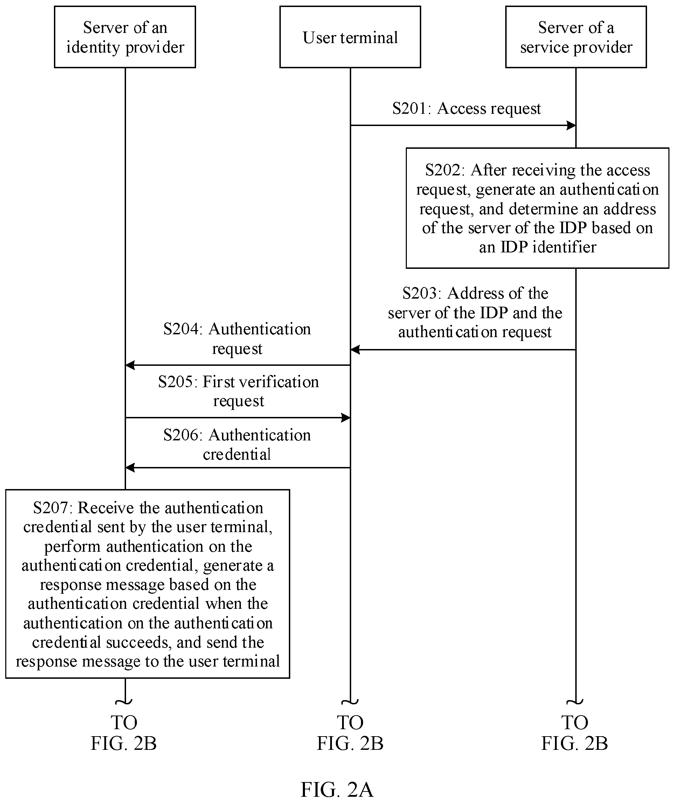

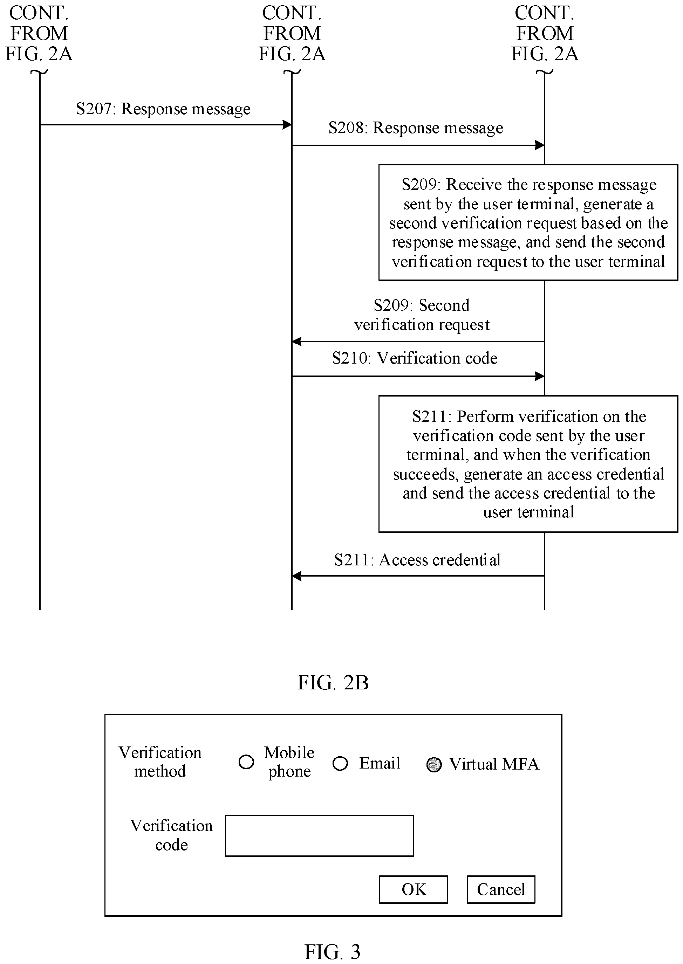

FIG. 1 is a schematic diagram of a system according to an embodiment of this application. FIG. 1 includes one user terminal, a server of one IDP, and servers of a plurality of SPs. All the plurality of SPs establish trust relationships with the IDP, and single sign-on may be implemented through federated identity authentication. When a user needs to log in to a system of any SP, the user can log in to the IDP to access resources of the SP. In this embodiment of this application, the user may initiate federated identity authentication from an IDP side, or may initiate federated identity authentication from an SP side. The following describes a method for initiating federated identity authentication from the SP side. FIG. 2A and FIG. 2B are a schematic interaction diagram of federated identity authentication according to an embodiment of this application. As shown in FIG. 2A and FIG. 2B, a federated identity authentication process initiated from the SP side is as follows:
S201: A user terminal sends an access request to a server of an SP.

When a user needs to access resources of the SP, the user enters a login link of the SP in a browser of the user terminal. After receiving the login link entered by the user, the user terminal initiates the access request to the server of the SP through the browser. The access request includes an IDP identifier of an IDP.

S202: After receiving the access request, the server of the SP generates an authentication request, and determines an address of a server of the IDP based on the IDP identifier.

After receiving the access request, the server of the SP determines, based on the IDP identifier in the access request, that federated identity authentication is required. Because metadata of the IDP is stored in the server of the SP, the server of the SP determines, based on the IDP identifier and the metadata of the IDP, the address of the server of the IDP corresponding to the IDP identifier. In addition, the server of the SP generates the authentication request in a SAML format. The authentication request includes an SP identifier, and the authentication request indicates the server of the IDP to perform identity authenticate on the user.

S203: The server of the SP sends the address of the server of the IDP and the authentication request to the user terminal. After generating the authentication request and determining the address of the server of the IDP, the server of the SP sends the address of the server of the IDP and the authentication request to the user terminal, so that the user terminal forwards the authentication request to the server of the IDP based on the address of the server of the IDP.

S204: The user terminal receives the authentication request and the address of the server of the IDP, and sends the authentication request to the server of the IDP based on the address of the server of the IDP.

S205: The server of the IDP receives the authentication request, and sends a first verification request to the user terminal based on the authentication request.

After receiving the authentication request sent by the user terminal, the server of the IDP sends the first verification request to the user terminal. The first verification request includes an IDP login page that is used to indicate the user to enter an authentication credential. The authentication credential includes a user name and a user password. The IDP login page includes a user name input box and a user password input box, which are used by the user to enter the user name and the user password.

S206: The user terminal sends the authentication credential to the server of the IDP.

The user terminal displays the IDP login interface on a browser page, receives the authentication credential entered by the user, and sends the authentication credential to the server of the IDP.

S207: The server of the IDP receives the authentication credential sent by the user terminal, performs authentication on the authentication credential, generates a response message based on the authentication credential when the authentication on the authentication credential succeeds, and sends the response message to the user terminal.

After receiving the authentication credential, the server of the IDP matches the user name and the user password that are in the authentication credential with a user name and a user password that are of a registered user and that are stored by the IDP. If the user name and the user password that are in the authentication credential are found in the server of the IDP, the server of the IDP determines that the verification on the authentication credential succeeds, and determines that the user is an authorized user.

After determining that the user is an authorized user, the server of the IDP determines user information of the user based on the user name. The user information includes the user name of the user, a user group to which the user belongs, and an MFA verification method bound to the user. The MFA verification method indicates a method of receiving a verification code when the user performs verification by using the verification code. The server of the IDP generates, based on the user information of the user, a response message for the authentication request sent by the server of the SP. The response message includes the IDP identifier, the user name of the user, the user group to which the user name belongs, and the MFA verification method bound to the user. The MFA verification method includes authentication via an email, authentication via a mobile number, or authentication via a dynamic verification code generated by an MFA device. The user may be bound to one or more MFA verification methods. If the user is bound to a plurality of MFA verification methods, the response message includes the plurality of MFA verification methods bound to the user. The MFA device may be a virtual MFA device, or may be a hardware MFA device. This is not specifically limited in this embodiment of this application.

The server of the IDP stores metadata of the SP. After generating the authentication request, the server of the IDP determines a public key corresponding to the SP and an address of the server of the SP based on the SP identifier in the authentication request. The server of the IDP may first sign the response message by using a private key of the IDP, then encrypt the signed response message by using the public key of the SP, and finally send the signed and encrypted response message and the address of the server of the SP to the user terminal. The server of the IDP may alternatively first encrypt the response message by using the public key of the SP, sign the encrypted response message by using the private key of the IDP, and then send the encrypted and signed response message and the address of the server of the SP to the user terminal. In this embodiment of this application, an example in which the response message is first signed and then encrypted is used for description.

S208: The user terminal forwards the response message to the server of the SP.

After receiving the address of the server of the SP and the encrypted and signed response message that are sent by the server of the IDP, the user terminal forwards the encrypted response message to the server of the SP based on the address of the server of the SP.

S209: The server of the SP receives the response message sent by the user terminal, generates a second verification request based on the response message, and sends the second verification request to the user terminal.

After receiving the signed and encrypted response message forwarded by the user terminal, the server of the SP decrypts the encrypted response message by using a private key of the SP. If the decryption succeeds, the server of the SP finds IDP metadata corresponding to the IDP identifier in the metadata of the server of the SP based on the IDP identifier in the response message, finds a public key of the IDP in the IDP metadata, and performs verification on a signature of the response message by using the public key of the IDP. If the server of the SP can successfully decrypt the encrypted response message and the verification on the signature succeeds, the server of the SP determines that the response message is the unmodified response message sent by the server of the IDP.

After determining that the response message is not modified, the server of the SP sends the second verification request to the user terminal in the MFA verification method corresponding to the user in the response message. The second verification request includes an MFA page used to indicate the user to perform multi-factor authentication. Specifically, the MFA page includes a verification method and a verification code input box. The verification method may be a verification method configured by the user, or may be selected by using a verification method option on the MFA page. For example, if only one MFA verification method is bound to the user and the bound MFA verification method is verification via an email or verification via a mobile number, the verification method on the MFA page cannot be selected. The server of the SP generates a verification code based on the bound MFA verification method and sends the verification code to an email address or a mobile number bound to the user.

If a plurality of MFA verification methods are bound to the user, the user needs to select an MFA verification method that needs to be currently used. FIG. 3 is a schematic diagram of an MFA page according to an embodiment of this application. The user sets three authentication methods: verification via an email, verification via a mobile number, and verification via a dynamic verification code generated by an MFA device. The user needs to select a method on the MFA page. After the user selects an MFAverification method, the user terminal sends a selection result of the user to the server of the SP, to indicate the server of the SP to perform verification in the MFAverification method indicated by the selection result. For example, if the user selects email verification, the server of the SP generates a verification code and sends the verification code to an email address of the user.

S210: The user terminal sends the verification code to the server of the SP.

If the MFAverification method bound to the user is verification via an email or verification via a mobile number, the verification code is generated by the server of the SP and sent to the email address or the mobile number bound to the user. If authentication via a dynamic verification code generated by the MFA device is bound to the user, the verification code is generated by the MFA device owned by the user. The user terminal receives the verification code entered by the user in the verification code input box on the MFA page, and sends the verification code to the server of the SP.

S211: The server of the SP performs verification on the verification code sent by the user terminal, and when the verification succeeds, generates an access credential and sends the access credential to the user terminal.

After receiving the verification code sent by the user terminal, the server of the SP performs verification on the verification code. For example, if the user selects the verification via an email, and the server of the SP determines that the verification code received from the user terminal is the same as the verification code that is generated by the server of the SP and sent to the email address of the user, it indicates that the verification succeeds. If the verification succeeds, the server of the SP determines identity information such as a user name, a user group, and access permission of the user in a system of the SP based on the user name and the user group to which the user name belongs in the response message, and an identity conversion rule between an IDP user and an SP user, generates the access credential based on the identity information of the user in the system of the SP, and sends the access credential to the user terminal. The user terminal needs to carry the access credential each time accessing the server of the SP. The user credential includes the user name of the user in the system of the SP.

It may be understood that, after receiving the access credential, the user terminal carries the access credential each time accessing the server of the SP. After the server of the service provider receives the access request that carries the access credential and that is sent by the user terminal, when the server of the service provider determines that the access credential is a valid access credential issued by the server of the service provider, the server of the service provider sends data to be accessed by using the access request to the user terminal.

In a possible embodiment, if the MFA verification method bound to the user includes authentication via a dynamic verification code generated by the MFA device, the response message further includes an MFA key, and the MFA key is used by the MFA device and the server of the SP to generate a verification code based on the MFA key and a TOTP algorithm When the user uses the verification code generated by the MFA device to perform authentication, after the server of the SP receives the verification code sent by the user terminal, the server of the SP generates a verification code based on the MFA key, and then the server of the SP compares the verification code generated based on the MFA key with the received verification code sent by the user terminal. If the two verification codes are the same, it indicates that the verification succeeds; if the two verification codes are different, it indicates that the verification fails.

In a possible embodiment, in S207, if the authentication credential sent by the user terminal to the server of the IDP fails to be verified by the server of the IDP, for example, if a user name or a user password entered by the user is incorrect, the server of the IDP generates a feedback message indicating that the user name or the user password is incorrect, sends the feedback message to the user terminal, and no longer performs an operation performed after the server of the IDP determines that the user is an authorized user, that is, no longer generates the response message and no longer performs subsequent processes in S208 to S211.

In a possible embodiment, in S209, if the server of the SP cannot decrypt the encrypted response message by using the private key of the SP, it indicates that the message received by the server of the SP is not sent by the server of the IDP that establishes a trust relationship with the SP, and the server of the SP does not send the second verification request to the user terminal. Alternatively, after successfully decrypting the encrypted response message by using the private key of the SP, the server of the SP performs verification on the signature of the response message by using the public key of the IDP. If the server of the SP determines that the signature of the response message is incorrect, it indicates that the response message is modified, and the server of the SP does not send the second verification request to the user terminal either.

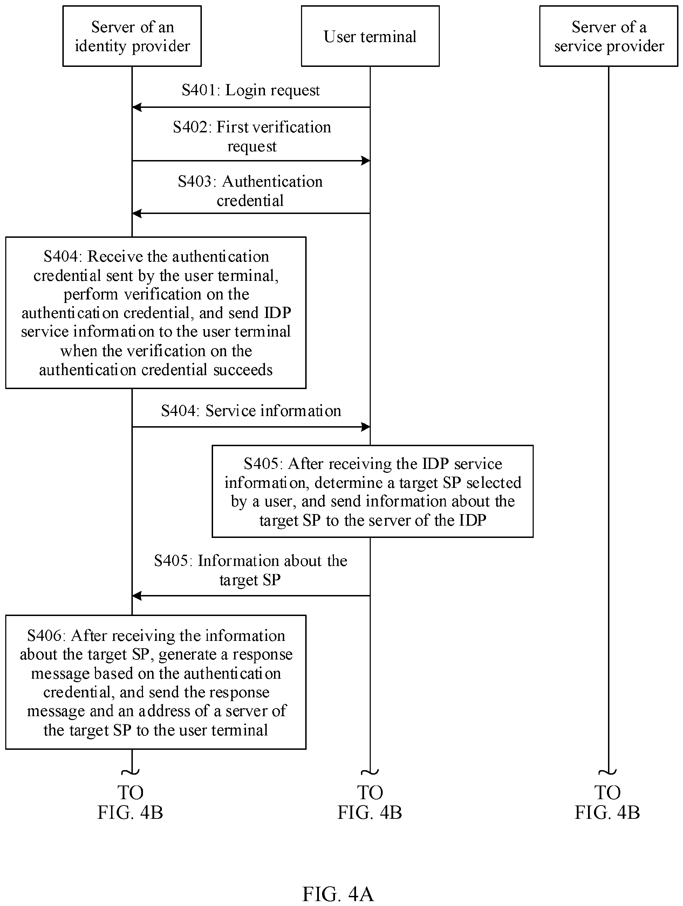

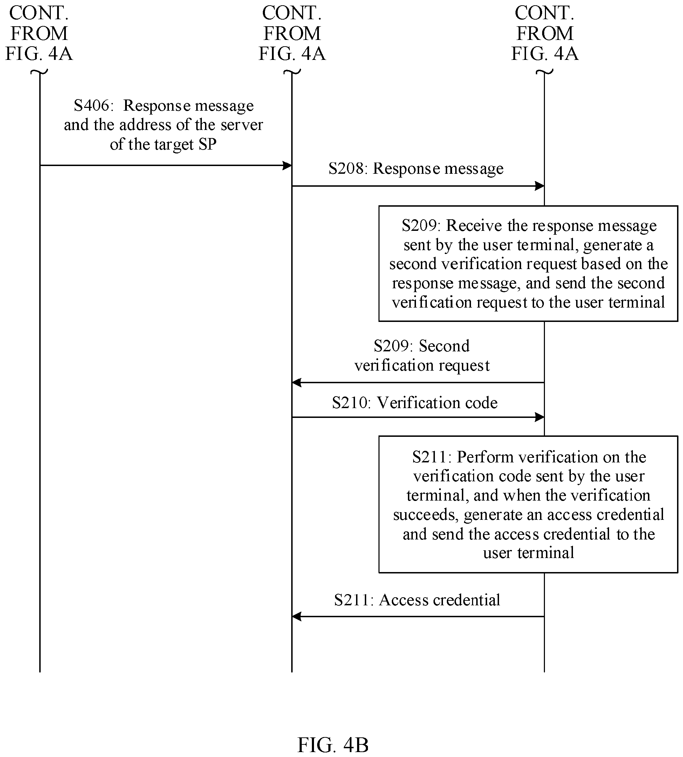

The following describes a method for initiating federated identity authentication from an IDP side. FIG. 4A and FIG. 4B are a schematic interaction diagram of federated identity authentication according to an embodiment of this application. As shown in FIG. 4A and FIG. 4B, a federated identity authentication process initiated from the IDP side is as follows:
S401: A user terminal sends a login request to a server of an IDP.

When a user needs to access resources of a target SP, the user may first log in to the server of the IDP. The user enters a login link of the IDP in a browser. After receiving the login link entered by the user, the user terminal sends the login request to the server of the IDP.

S402: After receiving the login request, the server of the IDP sends a first verification request to the user terminal.

After receiving the login request sent by the user terminal, the server of the IDP sends the first verification request to the user terminal. The first verification request includes an IDP login page that is used to indicate the user to enter an authentication credential, and the authentication credential includes a user name and a user password. The IDP login page includes a user name input box and a user password input box, which are used to indicate the user to enter the user name and the user password.

S403: The user terminal sends the authentication credential to the server of the IDP.

The user terminal displays the IDP login interface on a browser page, receives the authentication credential entered by the user, and sends the authentication credential to the server of the IDP.

S404: The server of the IDP receives the authentication credential sent by the user terminal, performs verification on the authentication credential, and sends service information to the user terminal when the verification on the authentication credential succeeds.

After receiving the authentication credential, the server of the IDP matches the user name and the user password that are in the authentication credential with a user name and a user password that are of a registered user and that are stored by the IDP. If the user name and the user password that are in the authentication credential are found in the server of the IDP, the server of the IDP determines that the user is an authorized user.

After determining that the user is an authorized user, the server of the IDP sends the service information to the user terminal. The service information includes tags or access links of one or more SPs that have established trust relationships with the IDP.

S405: After receiving the service information, the user terminal determines the target SP selected by the user, and sends information about the target SP to the server of the IDP.

After receiving the service information, the user terminal displays a page including tags or access links of one or more SPs in the browser. After the user selects the target SP, the user terminal sends the information about the target SP selected by the user to the server of the IDP. For example, if a browser page includes access links of n SPs from an SP 1 to an SP n, and the target SP that the user needs to access is the SP 1, the user taps an access link of the SP 1. S406: After receiving the information about the target SP, the server of the IDP generates a response message based on the authentication credential, and sends the response message and an address of a server of the target SP to the user terminal.

After receiving the information about the target SP, the server of the IDP determines the address of the server of the target SP based on the information about the target SP, and generates the response message based on the authentication credential. For a method for generating, signing, and encrypting the response message by the server of the IDP, refer to the method for generating, signing, and encrypting the response message in S207. Details are not described herein again.

After the server of the IDP sends the encrypted response message and the address of the server of the target SP to the user terminal, for other processes of initiating federated identity authentication from the IDP side, refer to S208 to S211. Details are not described herein again.

By implementing the foregoing method, during federated identity authentication, after the server of the identity provider performs first authentication on a user identity of the user and the authentication succeeds, the server of the service provider needs to perform second authentication on the user identity, and the server of the service provider allows the user to access resources of the service provider only after the second authentication on the user by the server of the service provider succeeds. Multi-factor authentication on the user identity prevents an identity credential of a single system from being used during federated identity authentication, prevents a risk that is caused to user data security due to leakage of the identity credential of the single system, and improves security of federated identity authentication.

In a possible embodiment, in S402, the first verification request sent by the IDP to the user terminal further includes tags or access links of servers of one or more SPs that have established trust relationships with the IDP. After receiving the first verification request, the user terminal displays a login page of the IDP and the tags or the access links of the servers of the one or more SPs that have established trust relationships with the IDP on a browser page. The user enters the authentication credential on the browser page and selects a target SP that needs to be accessed, and the user terminal then sends both the authentication credential and the information about the target SP to the server of the IDP. After determining, based on the authentication credential, that the user is an authorized user, the server of the IDP performs operations performed after the server of the IDP receives the information about the target SP in S406. Details are not described herein again.

In a possible embodiment, the user logs in to the server of the SP by using the foregoing two methods via the browser. After obtaining the access credential, the user terminal accesses the server of the SP by carrying the access credential. After obtaining the access credential, the server of the SP configures a federated identity credential for the user. The federated identity credential includes the MFA key. When the user terminal uses resources provided by the SP, all operation requests sent to the server of the SP include the federated identity credential. When the user performs a sensitive operation, the server of the SP requires to perform verification on a to-be-confirmed verification code generated by the MFA device. After the server of the SP receives the to-be-confirmed verification code sent by the user terminal, the server of the SP generates an MFA verification code based on the MFA key in the federated identity credential, and matches the MFA verification code with the to-be-confirmed verification code sent by the user terminal to the server of the SP. If the verification codes are the same, it indicates that the user can perform the sensitive operation. If the verification codes are different, the sensitive operation of the user is rejected.

Both the federated identity authentication initiated from the SP side and the federated identity authentication initiated from the IDP side described above are implemented by using the browser of the user terminal. In a possible embodiments, single sign-on to the server of the SP may also be implemented by using a client program of the user terminal. Specifically, after logging in to the client program, the user sends a response message to the server of the SP by using an address of the server of the SP that is set in the client program. For information included in the response message, refer to the information included in the response message in the federated identity authentication initiated from the SP side. The response information needs to include the MFAkey. That is, when the user accesses the server of the SP through the client program, the user needs to be bound to an authentication method via a dynamic verification code generated by the MFA device.

After the client program is authenticated by the server of the SP in the foregoing same method, the server of the SP issues a federated identity credential to the client program. The federated identity credential includes the MFA key. When the client program accesses an application programming interface (application programming interface, API) of the server of the SP for the first time after being authenticated by the server of the SP, an invocation request sent by the client program to the server of the SP includes the federated identity credential. In this case, the server of the SP requests to perform verification on the dynamic verification code generated by the MFA device. The server of the SP generates an MFA verification code based on the MFA key in the federated identity credential and matches the MFA verification code with the dynamic verification code that is generated by the MFA device and sent by the client program to the server of the SP. If the verification codes are the same, the client program has permission to access the API of the server of the SP. After determining that the client program has permission to invoke the API, the server of the SP issues an access credential to the client. The access credential includes an MFA authentication mark, and the MFA authentication mark indicates that the client program has permission to access the API of the server of the SP. The client program accesses the API of the server of the SP by using the access credential.

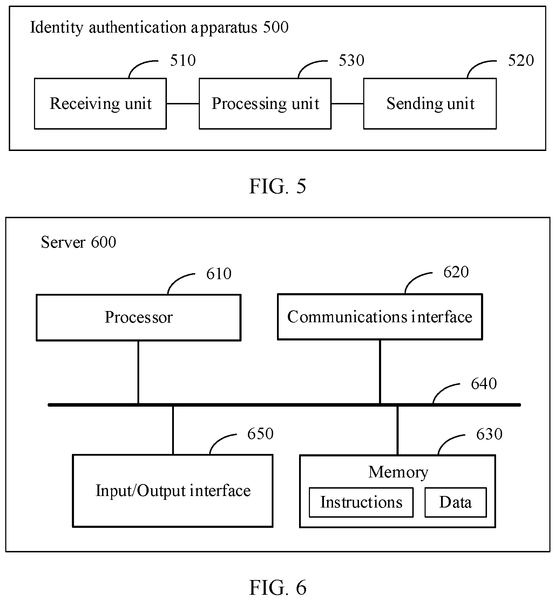

The foregoing describes in detail the identity authentication methods provided in this application with reference to FIG. 1 to FIG. 4A and FIG. 4B. The following describes, with reference to FIG. 5 and FIG. 6, a related apparatus and device for implementing identity authentication provided in embodiments of this application. FIG. 5 is a schematic diagram of a structure of an identity authentication apparatus according to an embodiment of this application. The identity authentication apparatus is deployed on the foregoing server of the SP. The identity authentication apparatus 500 includes a receiving unit 510, a sending unit 520, and a processing unit 530.

The receiving unit 510 is configured to receive a message indicating that a user identity of a user has been authenticated by a server of an identity provider, where the message includes information about a verification method bound to the user. Specifically, for information included in the message, refer to the response message in S207. Details are not described herein again.

The sending unit 520 is configured to send a second verification request to a user terminal based on the information about the verification method, where the second verification request indicates the user terminal to return a verification code. For generation of the second verification request and information included in the second verification request, refer to detailed descriptions in S209. Details are not described herein again.

The receiving unit 510 is further configured to receive a verification code sent by the user terminal. The verification code sent by the user terminal may be generated by a server of an SP and then sent to an email address or a mobile number used by the user, or may be generated by an MFA device used by the user. This is not specifically limited in this embodiment of this application.

The processing unit 530 is configured to perform verification on the verification code sent by the user terminal, and when the verification on the verification code succeeds, generate an access credential corresponding to the user and send the access credential to the user terminal. The access credential indicates that the user has permission to access the server of the service provider SP. For a process in which the processing unit 530 performs verification on the verification code, refer to the process in which the server of the SP performs verification on the verification code in S211. Details are not described herein again.

In a possible embodiment, the processing unit 530 is further configured to determine, based on the information about the verification method, a method in which the user receives the verification code, and generate the verification code, where the method in which the user receives the verification code includes receiving the verification code via an email or receiving the verification code via an SMS message.

The sending unit 520 is specifically configured to send the second verification request to the user terminal, and send, in the determined method in which the user receives the verification code, the verification code to an electronic device used by the user.

In a possible embodiment, the verification code is generated by the MFA device used by the user, and the message includes an MFA key of the user. The receiving unit 510 is further configured to receive a first verification code that is generated by the MFA device and sent by the user terminal. The processing unit 530 generates the second verification code based on the MFA key, performs verification on the first verification code based on the second verification code, and when the first verification code is the same as the second verification code, determines that the verification on the first verification code succeeds.

In a possible embodiment, when the identity authentication apparatus receives the message sent by the server of the identity provider IDP, the receiving unit 510 receives an access request sent by the user terminal, where the access request includes an IDP identifier of the IDP; and the processing unit 530 generates an authentication request based on the access request, where the authentication request includes an identifier of the SP, and determines an address of the server of the IDP based on the IDP identifier. The sending unit 520 sends the authentication request to the server of the IDP based on the address of the server of the IDP, where the authentication request indicates the server of the IDP to perform authentication on the user identity of the user and to send the message to the user terminal based on an authentication result.

Specifically, for an operation of implementing identity authentication by the identity authentication apparatus 500, refer to the operation performed by the server of the SP in the foregoing method embodiments. Details are not described herein again.

FIG. 6 is a schematic diagram of a structure of a server according to an embodiment of this application. The server 600 includes a processor 610, a communications interface 620, and a memory 630. Optionally, the processor 610, the communications interface 620, and the memory 630 are connected to each other through a bus 640.

The processor 610 is configured to implement operations performed by the processing unit 530. For specific implementations of the operations performed by the processor 610, refer to specific operations performed by the server of the SP in the foregoing method embodiments. For example, the processor 610 is configured to perform operations of the server of the SP in S202, S209, and S211 in FIG. 2A and FIG. 2B, and details are not described herein again.

The processor 610 may have a plurality of specific implementations. For example, the processor 610 may be a central processing unit (central processing unit, CPU) or a graphics processing unit (graphics processing unit, GPU). The processor 610 may alternatively be a single-core processor or a multi-core processor. The processor 610 may be a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field-programmable gate array, FPGA), a generic array logic (generic array logic, GAL), or any combination thereof. The processor 610 may alternatively be implemented independently by using a logic device with built-in processing logic, for example, an FPGA or a digital signal processor (digital signal processor, DSP).

The communications interface 620 may be a wired interface or a wireless interface, and is configured to communicate with another module or device. The wired interface may be an Ethernet interface or a local interconnect network (local interconnect network, LIN). The wireless interface may be a cellular network interface, a wireless local area network interface, or the like.

The communications interface 620 in this embodiment of this application performs the operations implemented by the receiving unit 510 and the sending unit 520, for example, may be configured to: receive the access request sent by the user terminal in S201, receive the response message that is generated by the server of the IDP and that is forwarded by the user terminal, and send the second verification message to the user terminal in S209. Specifically, for an action performed by the communications interface 620, refer to an action of receiving or sending by the server of the SP in the foregoing method embodiments. Details are not described herein again.

The memory 630 may be a non-volatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The memory 630 may also be a volatile memory. The volatile memory may be a random access memory (random access memory, RAM), and is used as an external cache.

The memory 630 may also be configured to store instructions and data, so that the processor 610 invokes the instructions stored in the memory 630 to implement an operation performed by the processing unit 530, for example, the operations performed by the server of the SP in the foregoing method embodiments. In addition, the server 600 may include more or fewer components than those shown in FIG. 6, or may have different component configuration manners.

The bus 640 may be a peripheral component interconnect (peripheral component interconnect, PCI) bus, an extended industry standard architecture (extended industry standard architecture, EIS A for short) bus, or the like. The bus 640 may be classified into an address bus, a data bus, a control bus, and the like. For ease of representation, only one thick line is used to represent the bus in FIG. 6, but this does not mean that there is only one bus or only one type of bus.

Optionally, the server 600 may further include an input/output interface 650. The input/output interface 650 is connected to an input/output device, and is configured to receive input information and output an operation result.

Specifically, for specific implementations of coordinating various operations performed by the server 600, refer to specific operations performed by the server of the SP in the foregoing method embodiments. Details are not described herein again.

Embodiments of this application further provide a non-transient computer-readable storage medium The computer-readable storage medium stores a computer program. When the computer program runs on a processor, the method steps performed by the server of the SP in the foregoing method embodiments may be implemented. For specific implementations of the method steps performed by the processor of the computer storage medium, refer to specific operations of the server of the SP in the foregoing method embodiments. Details are not described herein again.

In the foregoing embodiments, the description of each embodiment has respective focuses. For a part that is not described in detail in an embodiment, refer to related descriptions in other embodiments.

All or some of the foregoing embodiments may be implemented by software, hardware, firmware, or any combination thereof. When software is used to implement embodiments, the foregoing embodiments may be implemented completely or partially in a form of a computer program product. The computer program product includes one or more computer instructions. When the computer program instructions are loaded or executed on a computer, all or some of the procedures or functions according to the embodiments of the present invention are generated. The computer may be a general-purpose computer, a dedicated computer, a computer network, or other programmable apparatuses. The computer instructions may be stored in the computer-readable storage medium or may be transmitted from a computer-readable storage medium to another computer-readable storage medium For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium The semiconductor medium may be a solid-state drive (solid-state drive, SSD).

Steps in the methods in embodiments of this application may be sequentially scheduled, combined, or deleted according to an actual requirement. Modules in the apparatus in embodiments of this application may be divided, combined, or deleted according to an actual requirement.

Embodiments of this application are described in detail above. The principle and implementation of this application are described herein through specific examples. The descriptions about embodiments are merely provided to help understand the method and core ideas of this application. In addition, a person of ordinary skill in the art can make variations and modifications to this application in terms of the specific implementations and application scopes according to the ideas of this application. Therefore, the content of this specification shall not be construed as a limit to this application.

## Claims

1. An identity authentication method, comprising:
receiving, by a cloud service provider, a message indicating that a user identity of a user has been authenticated by a server of an identity provider, wherein the message comprises information about a verification method bound to the user;
performing, by the cloud service provider, second authentication on the user identity of the user, after receiving the message indicating that the user identity of the user has been authenticated by the server of the identity provider, comprising: sending (S209) a verification request to a user terminal based on the information about the verification method, receiving (S210) a verification code sent by the user terminal, and performing (S211) verification on the verification code; and
allowing, by the cloud service provider, the user to access resources of the cloud service provider, after the user identity of the user has been authenticated by the cloud service provider

2. The method according to claim 1, wherein the resources of the cloud service provider are cloud service resources.

3. The method according to claim 1 or 2, wherein the user is a user of an enterprise system, and the identity provider belongs to the enterprise system

4. The method according to claim 3, wherein the resources accessed by the user is a resource applied by the enterprise system from the cloud service provider

5. The method according to any one of claims 1 to 4, wherein a trust relationship is established between the identity provider and the cloud service provider

6. The method according to any one of claims 1 to 5, wherein, if the verification method bound to the user is verification via an email or verification via a mobile number, the step of performing second authentication on the user identity of the user further comprises:
generating, by the cloud service provider, a verification code;
sending, by the cloud service provider, the generated verification code to an email address or a mobile number used by the user; and
determining, by the cloud service provider, whether the verification code received from the user terminal is the same as the verification code that is generated and sent by the cloud service provider

7. The method according to any one of claims 1 to 5, wherein, if the verification method bound to the user is verification via a dynamic verification code generated by a multi-factor authentication, MFA, device bound to the user, the step of performing second authentication on the user identity of the user comprises:
generating, by the cloud service provider, a verification code based on an MFA key comprised in the message; and
determining, by the cloud service provider, whether the verification code received from the user terminal is the same as the verification code generated by the cloud service provider based on the MFA key.

8. A server (600) of a cloud service provider, comprising a processor (610) and a memory (630);
wherein the memory (630) is configured to store instructions; and
wherein the processor (610) is configured to execute the instructions, so that the server (600) is configured to:
receive a message indicating that a user identity of a user has been authenticated by a server of an identity provider, wherein the message comprises information about a verification method bound to the user;
perform second authentication on the user identity of the user, after receiving the message indicating that the user identity of the user has been authenticated by the server of the identity provider, comprising: sending (S209) a verification request to a user terminal based on the information about the verification method, receiving (S210) a verification code sent by the user terminal, and performing (S211) verification on the verification code; and
allow the user to access resources of the cloud service provider, after the user identity of the user has been authenticated by the cloud service provider

9. The server (600) according to claim 8, wherein the resources of the cloud service provider are cloud service resources.

10. The server (600) according to claim 8 or 9, wherein the user is a user of an enterprise system, and the identity provider belongs to the enterprise system

11. The server (600) according to claim 10, wherein the resources accessed by the user is a resource applied by the enterprise system from the cloud service provider

12. The server (600) according to any one of claims 8 to 11, wherein a trust relationship is established between the identity provider and the cloud service provider

13. The server (600) according to any one of claims 8 to 12, wherein the server (600) is configured to perform the following further steps during performing second authentication on the user identity of the user, if the verification method bound to the user is verification via an email or verification via a mobile number:
generate a verification code;
send the generated verification code to an email address or a mobile number used by the user; and
determine whether the verification code received from the user terminal is the same as the verification code that is generated and sent by the cloud service provider

14. The server (600) according to any one of claims 8 to 12, wherein the server (600) is configured to perform the following further steps during performing second authentication on the user identity of the user, if the verification method bound to the user is verification via a dynamic verification code generated by a multi-factor authentication, MFA, device bound to the user:
generating, by the cloud service provider, a verification code based on an MFA key comprised in the message; and
determining, by the cloud service provider, whether the verification code received from the user terminal is the same as the verification code generated by the cloud service provider based on the MFA key

15. A computer-readable storage medium, wherein the computer-readable storage medium stores a computer program, and when the computer program is executed by a processor of a server of a service provider, the server performs the method according to any one of claims 1 to 7.

## Patentansprüche

1. Verfahren zur Identitätsauthentifizierung, umfassend:
Empfangen, durch einen Cloud-Dienstanbieter, einer Nachricht, die angibt, dass eine Benutzeridentität eines Benutzers durch einen Server eines Identitätsanbieters authentifiziert wurde, wobei die Nachricht Informationen über ein an den Benutzer gebundenes Verifizierungsverfahren umfasst;
Durchführen, durch den Cloud-Dienstanbieter, einer zweiten Authentifizierung bezüglich der Benutzeridentität des Benutzers nach dem Empfangen der Nachricht, die angibt, dass die Benutzeridentität des Benutzers durch den Server des Identitätsanbieters authentifiziert wurde, Folgendes umfassend: Senden (S209) einer Verifizierungsanforderung an ein Benutzerendgerät basierend auf den Informationen über das Verifizierungsverfahren, Empfangen (S210) eines Verifizierungscodes, der durch das Benutzerendgerät gesendet wird, und Durchführen (S211) einer Verifizierung bezüglich des Verifizierungscodes; und
Ermöglichen, durch den Cloud-Dienstanbieter, dass der Benutzer auf Ressourcen des Cloud-Dienstanbieters zugreifen kann, nachdem die Benutzeridentität des Benutzers durch den Cloud-Dienstanbieter authentifiziert wurde.

2. Verfahren nach Anspruch 1, wobei die Ressourcen des Cloud-Dienstanbieters Cloud-Dienstressourcen sind.

3. Verfahren nach Anspruch 1 oder 2, wobei der Benutzer ein Benutzer eines Unternehmenssystems ist und der Identitätsanbieter zu dem Unternehmenssystem gehört.

4. Verfahren nach Anspruch 3, wobei die Ressourcen, auf die der Benutzer zugreift, eine Ressource sind, die durch das Unternehmenssystem von dem Cloud-Dienstanbieter angewendet wird.

5. Verfahren nach einem der Ansprüche 1 bis 4, wobei eine Vertrauensbeziehung zwischen dem Identitätsanbieter und dem Cloud-Dienstanbieter hergestellt wird.

6. Verfahren nach einem der Ansprüche 1 bis 5, wobei, wenn das an den Benutzer gebundene Verifizierungsverfahren eine Verifizierung über eine E-Mail oder eine Verifizierung über eine Mobiltelefonnummer ist, der Schritt des Durchführens einer zweiten Authentifizierung bezüglich der Benutzeridentität des Benutzers ferner Folgendes umfasst:
Generieren, durch den Cloud-Dienstanbieter, eines Verifizierungscodes;
Senden, durch den Cloud-Dienstanbieter, des generierten Verifizierungscodes an eine E-Mail-Adresse oder eine Mobiltelefonnummer, die durch den Benutzer verwendet wird, und Bestimmen, durch den Cloud-Dienstanbieter, ob der Verifizierungscode, der von dem Benutzerendgerät empfangen wird, mit dem Verifizierungscode übereinstimmt, der durch den Cloud-Dienstanbieter generiert und gesendet wird.

7. Verfahren nach einem der Ansprüche 1 bis 5, wobei, wenn das an den Benutzer gebundene Verifizierungsverfahren eine Verifizierung über einen dynamischen Verifizierungscode ist, der durch eine Multifaktor-Authentifizierungsvorrichtung, MFA-Vorrichtung, die an den Benutzer gebunden ist, generiert wird, der Schritt des Durchführens einer zweiten Authentifizierung bezüglich der Benutzeridentität des Benutzers Folgendes umfasst:
Generieren, durch den Cloud-Dienstanbieter, eines Verifizierungscodes basierend auf einem MFA-Schlüssel, der in der Nachricht umfasst ist; und
Bestimmen, durch den Cloud-Dienstanbieter, ob der Verifizierungscode, der von dem Benutzerendgerät empfangen wird, mit dem Verifizierungscode übereinstimmt, der durch den Cloud-Dienstanbieter basierend auf dem MFA-Schlüssel generiert wird.

8. Server (600) eines Cloud-Dienstanbieters, umfassend einen Prozessor (610) und einen Speicher (630);
wobei der Speicher (630) dazu konfiguriert ist, Anweisungen zu speichern; und
wobei der Prozessor (610) dazu konfiguriert ist, die Anweisungen auszuführen, sodass der Server (600) zu Folgendem konfiguriert ist:
Empfangen einer Nachricht, die angibt, dass eine Benutzeridentität eines Benutzers durch einen Server eines Identitätsanbieters authentifiziert wurde, wobei die Nachricht Informationen über ein an den Benutzer gebundenes Verifizierungsverfahren umfasst;
Durchführen einer zweiten Authentifizierung bezüglich der Benutzeridentität des Benutzers nach dem Empfangen der Nachricht, die angibt, dass die Benutzeridentität des Benutzers durch den Server des Identitätsanbieters authentifiziert wurde, Folgendes umfassend: Senden (S209) einer Verifizierungsanforderung an ein Benutzerendgerät basierend auf den Informationen über das Verifizierungsverfahren, Empfangen (S210) eines Verifizierungscodes, der durch das Benutzerendgerät gesendet wurde, und Durchführen (S211) einer Verifizierung bezüglich des Verifizierungscodes; und
Ermöglichen, dass der Benutzer auf Ressourcen des Cloud-Dienstanbieters zugreifen kann, nachdem die Benutzeridentität des Benutzers durch den Cloud-Dienstanbieter authentifiziert wurde.

9. Server (600) nach Anspruch 8, wobei die Ressourcen des Cloud-Dienstanbieters Cloud-Dienstressourcen sind.

10. Server (600) nach Anspruch 8 oder 9, wobei der Benutzer ein Benutzer eines Unternehmenssystems ist und der Identitätsanbieter zu dem Unternehmenssystem gehört.

11. Server (600) nach Anspruch 10, wobei die Ressourcen, auf die der Benutzer zugreift, eine Ressource sind, die durch das Unternehmenssystem von dem Cloud-Dienstanbieter angewendet wird.

12. Server (600) nach einem der Ansprüche 8 bis 11, wobei eine Vertrauensbeziehung zwischen dem Identitätsanbieter und dem Cloud-Dienstanbieter hergestellt wird.

13. Server (600) nach einem der Ansprüche 8 bis 12, wobei der Server (600) dazu konfiguriert ist, die folgenden weiteren Schritte während des Durchführens einer zweiten Authentifizierung bezüglich der Benutzeridentität des Benutzers durchzuführen, wenn das an den Benutzer gebundene Verifizierungsverfahren eine Verifizierung über eine E-Mail oder eine Verifizierung über eine Mobiltelefonnummer ist:
Generieren eines Verifizierungscodes;
Senden des generierten Verifizierungscodes an eine E-Mail-Adresse oder eine Mobiltelefonnummer, die durch den Benutzer verwendet wird; und
Bestimmen, ob der Verifizierungscode, der von dem Benutzerendgerät empfangen wird, mit dem Verifizierungscode übereinstimmt, der durch den Cloud-Dienstanbieter generiert und gesendet wird.

14. Server (600) nach einem der Ansprüche 8 bis 12, wobei der Server (600) dazu konfiguriert ist, die folgenden weiteren Schritte während des Durchführens einer zweiten Authentifizierung bezüglich der Benutzeridentität des Benutzers durchzuführen, wenn das an den Benutzer gebundene Verifizierungsverfahren eine Verifizierung über einen dynamischen Verifizierungscode ist, der durch eine Multifaktor-Authentifizierungsvorrichtung, MFA-Vorrichtung, die an den Benutzer gebunden ist, generiert wird:
Generieren, durch den Cloud-Dienstanbieter, eines Verifizierungscodes basierend auf einem MFA-Schlüssel, der in der Nachricht umfasst ist; und
Bestimmen, durch den Cloud-Dienstanbieter, ob der Verifizierungscode, der von dem Benutzerendgerät empfangen wird, mit dem Verifizierungscode übereinstimmt, der durch den Cloud-Dienstanbieter basierend auf dem MFA-Schlüssel generiert wird.

15. Computerlesbares Speichermedium, wobei das computerlesbare Speichermedium ein Computerprogramm speichert und, wenn das Computerprogramm durch einen Prozessor eines Servers eines Dienstanbieters ausgeführt wird, der Server das Verfahren nach einem der Ansprüche 1 bis 7 durchführt.

## Revendications

1. Procédé d'authentification d'identité, comprenant :
la réception, par un fournisseur de services en nuage, d'un message indiquant qu'une identité d'utilisateur d'un utilisateur a été authentifiée par un serveur d'un fournisseur d'identité, dans lequel le message comprend des informations sur un procédé de vérification lié à l'utilisateur ;
l'exécution, par le fournisseur de services en nuage, d'une seconde authentification sur l'identité de l'utilisateur, après réception du message indiquant que l'identité de l'utilisateur a été authentifiée par le serveur du fournisseur d'identité, comprenant : l'envoi (S209) d'une requête de vérification à un terminal utilisateur en fonction des informations relatives au procédé de vérification, la réception (S210) d'un code de vérification envoyé par le terminal utilisateur, et l'exécution (S211) d'une vérification sur le code de vérification ; et
l'autorisation, par le fournisseur de services en nuage, à l'utilisateur d'accéder aux ressources du fournisseur de services en nuage, après que l'identité de l'utilisateur a été authentifiée par le fournisseur de services en nuage.

2. Procédé selon la revendication 1, dans lequel les ressources du fournisseur de services en nuage sont des ressources de services en nuage.

3. Procédé selon la revendication 1 ou 2, dans lequel l'utilisateur est un utilisateur d'un système d'entreprise, et le fournisseur d'identité appartient au système d'entreprise.

4. Procédé selon la revendication 3, dans lequel les ressources auxquelles accède l'utilisateur sont des ressources appliquées par le système d'entreprise en provenance du fournisseur de services en nuage.

5. Procédé selon l'une quelconque des revendications 1 à 4, dans lequel une relation de confiance est établie entre le fournisseur d'identité et le fournisseur de services en nuage.

6. Procédé selon l'une quelconque des revendications 1 à 5, dans lequel, si le procédé de vérification lié à l'utilisateur est une vérification par courrier électronique ou une vérification par numéro de téléphone mobile, l'étape d'exécution d'une seconde authentification sur l'identité de l'utilisateur comprend également :
la génération, par le fournisseur de services en nuage, d'un code de vérification ;
l'envoi, par le fournisseur de services en nuage, du code de vérification généré à une adresse électronique ou un numéro de téléphone mobile utilisé par l'utilisateur, et
le fait de déterminer, par le fournisseur de services en nuage, si le code de vérification reçu en provenance du terminal utilisateur est le même que le code de vérification qui est généré et envoyé par le fournisseur de services en nuage.

7. Procédé selon l'une quelconque des revendications 1 à 5, dans lequel, si le procédé de vérification lié à l'utilisateur est une vérification par un code de vérification dynamique généré par un dispositif d'authentification multifacteur, MFA, lié à l'utilisateur, l'étape d'exécution d'une seconde authentification sur l'identité de l'utilisateur comprend :
la génération, par le fournisseur de services en nuage, d'un code de vérification basé sur une clé MFA comprise dans le message ; et
le fait de déterminer, par le fournisseur de services en nuage, si le code de vérification reçu en provenance du terminal utilisateur est le même que le code de vérification généré par le fournisseur de services en nuage en fonction de la clé MFA.

8. Serveur (600) d'un fournisseur de services en nuage, comprenant un processeur (610) et une mémoire (630) ;
dans lequel la mémoire (630) est configurée pour stocker des instructions ; et
dans lequel le processeur (610) est configuré pour exécuter les instructions, de sorte que le serveur (600) est configuré pour :
recevoir un message indiquant qu'une identité d'utilisateur d'un utilisateur a été authentifiée par un serveur d'un fournisseur d'identité, dans lequel le message comprend des informations sur un procédé de vérification lié à l'utilisateur ;
exécuter une seconde authentification sur l'identité de l'utilisateur, après réception du message indiquant que l'identité de l'utilisateur a été authentifiée par le serveur du fournisseur d'identité, comprenant : l'envoi (S209) d'une requête de vérification à un terminal utilisateur en fonction des informations relatives au procédé de vérification, la réception (S210) d'un code de vérification envoyé par le terminal utilisateur, et l'exécution (S211) d'une vérification sur le code de vérification ; et
autoriser l'utilisateur à accéder aux ressources du fournisseur de services en nuage, après que l'identité de l'utilisateur a été authentifiée par le fournisseur de services en nuage.

9. Serveur (600) selon la revendication 8, dans lequel les ressources du fournisseur de services en nuage sont des ressources de services en nuage.

10. Serveur (600) selon la revendication 8 ou 9, dans lequel l'utilisateur est un utilisateur d'un système d'entreprise, et le fournisseur d'identité appartient au système d'entreprise.

11. Serveur (600) selon la revendication 10, dans lequel les ressources auxquelles accède l'utilisateur sont des ressources appliquées par le système d'entreprise en provenance du fournisseur de services en nuage.

12. Serveur (600) selon l'une quelconque des revendications 8 à 11, dans lequel une relation de confiance est établie entre le fournisseur d'identité et le fournisseur de services en nuage.

13. Serveur (600) selon l'une quelconque des revendications 8 à 12, dans lequel le serveur (600) est configuré pour effectuer les étapes supplémentaires suivantes lors de l'exécution d'une seconde authentification sur l'identité de l'utilisateur, si le procédé de vérification lié à l'utilisateur est une vérification par courrier électronique ou une vérification par un numéro de téléphone mobile :
la génération d'un code de vérification ;
l'envoi du code de vérification généré à une adresse électronique ou un numéro de téléphone mobile utilisé par l'utilisateur ; et
le fait de déterminer si le code de vérification reçu en provenance du terminal utilisateur est le même que le code de vérification qui est généré et envoyé par le fournisseur de services en nuage.

14. Serveur (600) selon l'une quelconque des revendications 8 à 12, dans lequel le serveur (600) est configuré pour effectuer les étapes supplémentaires suivantes lors de l'exécution d'une seconde authentification sur l'identité de l'utilisateur, si le procédé de vérification lié à l'utilisateur est une vérification via un code de vérification dynamique généré par un dispositif d'authentification multifacteur, MFA, lié à l'utilisateur :
la génération, par le fournisseur de services en nuage, d'un code de vérification basé sur une clé MFA comprise dans le message ; et
le fait de déterminer, par le fournisseur de services en nuage, si le code de vérification reçu en provenance du terminal utilisateur est le même que le code de vérification généré par le fournisseur de services en nuage en fonction de la clé MFA.

15. Support de stockage lisible par ordinateur, dans lequel le support de stockage lisible par ordinateur stocke un programme informatique, et lorsque le programme informatique est exécuté par un processeur d'un serveur d'un fournisseur de services, le serveur exécute le procédé selon l'une quelconque des revendications 1 à 7.
